# EUROPEAN PATENT APPLICATION

(11) **EP 1 659 779 A1**
(43) Date of publication of application: **24.05.2006**
(21) Application number: 04027649.5
(22) Date of filing: 22.11.2004
(51) Int. Cl.: H04N 5/10

(54) **Method and decoder circuit for separating synchronization pulses**

(71) Applicant: TTE Germany GmbH, 78048 Villingen-Schwenningen (DE)
(72) Inventor: Fey, Bernd, 78050 VS-Villingen (DE)
(74) Representative: Arnold, Klaus-Peter

(57) **Abstract**

The method for decoding a vertical synchronization information (T, H1) included in a luminance signal (5a) comprises the steps of slicing the luminance signal (5a) for providing a composite sync signal (5b) comprising horizontal and vertical synchronization pulses, separating the horizontal sync pulses (H) from the luminance signal (5a) or the composite sync signal (5b) for providing a H sync signal (5c), generating a V pulse gate signal (5d) from the H sync signal (5c), gating the composite sync signal (5b) with the V pulse gate signal (5d) for separating a vertical synchronization pulse (V) included in the composite sync signal (5b), generating a code pulse gate signal (5f) from the vertical synchronization pulse (V), and extracting a code pulse (T, H1) included in the composite sync signal (5b) via the code pulse gate signal (5f). A decoder circuit (DC) utilising the method is arranged for example in a television receiver being equipped for receiving and displaying Euro1080 HDTV transmissions.

## Description

### FILED OF THE INVENTION

The present invention relates to a method for a separating synchronization pulses from a luminance signal and to a respective decoder circuit for a use for example in a television receiver. The invention relates in particular to a correct recognition of vertical pulses as used in high definition television (HDTV) broadcast transmissions having an interlace information for a picture display.

### BACKGROUND OF THE INVENTION

For a transmission of an analog television program a video signal is used, which contains all the information for color and brightness of the picture. For a display on a television receiver in addition a synchronization information is necessary for a deflection circuit of the television receiver. This information is contained in the video signal in the form a phase, amplitude and/or pulse- width modulation. In a television receiver, the information has to be separated for establishing the respective picture content.

The video signal can be transmitted in an analog or a digital manner for example via a satellite. An analog video signal contains in particular horizontal and vertical synchronization pulses, which can be separated by a synchronization pulse separator circuit. For receiving a digital television program a digital settop box or a digital satellite receiver is required. A respective appliance comprises usually analog outputs providing for example CVBS, RGB and/or Y Pr Pb signals for a use with current television receivers.

Several standards are known for the transmission and display of television programs, for example PAL, SECAM and NTSC. Further known are high definition television transmissions, which have a higher pixel resolution with regard to the horizontal and vertical dimension of the picture, and therefore a better picture quality as compared with the current NTSC, PAL and SECAM standards.

Already established HDTV systems are for the example the HDTV standard SMPTE274M or the SMPTE295M standard, known also as EUR01080. EUR01080 HDTV transmissions are already transmitted by SES-Astra for Europe since January 2004 via an Astra satellite. EURO1080 has changed its name to HD-1 on September 1, 2004, further information about EURO1080 HDTV respectively HD-1 can be obtained from the Web sites www.hd-1.tv and www.infosat.de.

For a respective television standard a synchronization pulse separator circuit has to decode the synchronization information included in the video signal. In US 4,675,734 a synchronization pulse separator circuit is described, which is compatible with various television formats and frequencies of video signals. In the US 5,592,230 a high definition television receiver is described, which is capable of reproducing both an NTSC signal and an HDTV signal.

In DE 39 11 236 A1 a method and a circuit for the separation of H and V synchronization pulses, contained in a HDTV signal, is disclosed. The synchronization pulses are tri-level pulses for controlling vertical and horizontal deflection, and comprise an interlace information for a display of two fields establishing a frame for a display of a picture on the screen of a television receiver.

The SMPTE274M HDTV standard defines a source format with a resolution of 1920 x 1080 with 1080 visible lines and a total of 1125 horizontal lines. Via an interlace information for the vertical deflection two fields are combined to a frame for the picture display. The fields are displayed for example with a rate of 60 Hz.

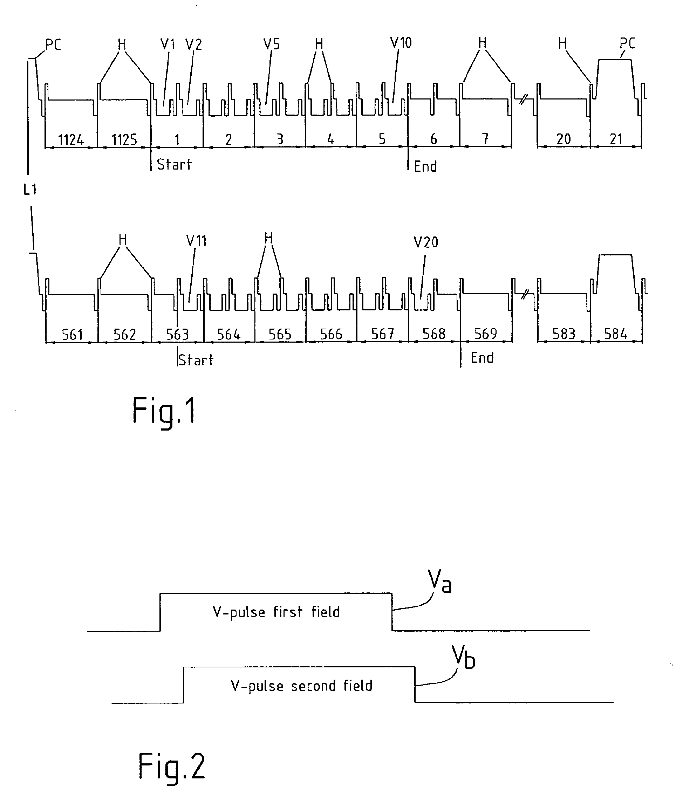

The interlace information for SMPTE274M is explained in more detail now with regard to Fig. 1, which shows schematically a luminance signal L1 comprising a vertical synchronization information for an interlace display in accordance with this standard. The signal L1 comprises in particular synchronization pulses H for the horizontal deflection and in the lines 1 - 5 serration pulses V1 - V10 and in the lines 563 - 568 serration pulses V11 - V20, from which V deflection pulses Va, Vb can be generated for the vertical deflection, as shown in Fig. 2.

The lines 1 - 5 comprise each two pulses H and two serration pulses. The lines 6 - 20 contain only pulses H, but still no picture content. The first visible line is line 21, which contains a picture content PC between horizontal pulses H, as known. The H pulses in the lines 1 - 20 are necessary for keeping the horizontal deflection circuit of the television receiver synchronized, before the display of the first visible lines begins.

For the second field, serration pulses V11 - V20 are provided in the lines 563 - 568. The first pulse V11 for the second field is contained in the second half of the line 563 and the last pulse V20 is contained in the first half of the line 568. The middle of the line 563 corresponds to half of the time used for the transmission of 1125 lines, which corresponds to the start for the second field.

The V pulse Va for the first field and the V pulse Vb for the second field can be generated from the serration pulses via a known synchronization pulse separator circuit, which uses for example an integrator being sensitive to the negative serration pulses. Because the first serration pulse V11 for the second field begins in the middle of the line 563, the V pulse Vb for the second field has a phase shift with regard to the horizontal line and therefore with the V pulse Va of the first field. Both V pulses Va, Vb are used in a respective television receiver to distinguish the first and the second field of a frame, for providing a correct display of the television picture.

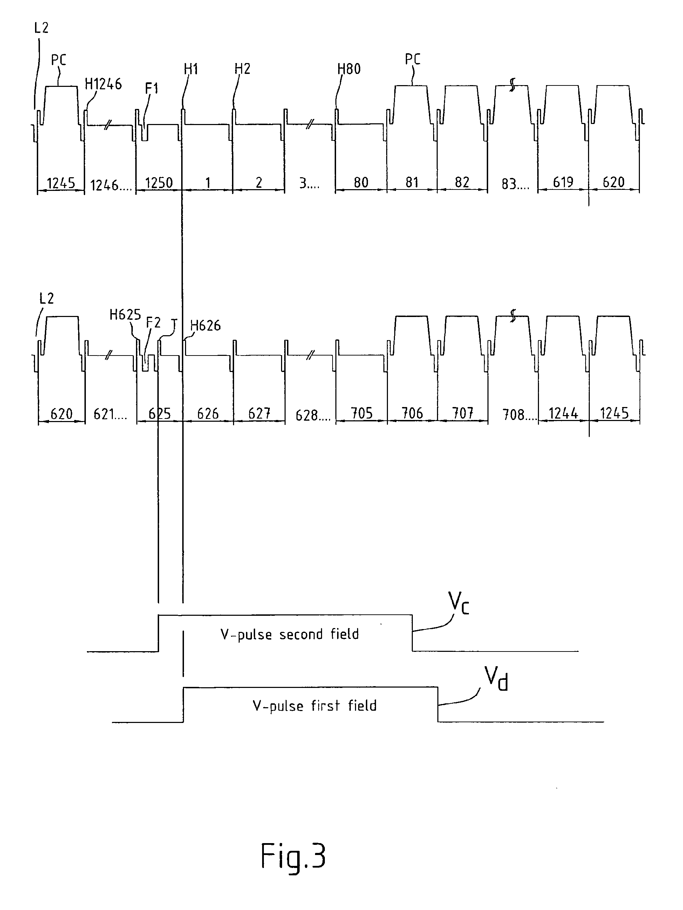

In figure 3 horizontal lines of a luminance signal L2 are shown comprising the information for the interlaced vertical deflection of the two fields, as used by the EURO 1080 HDTV television broadcast and as described by the SMPTE295M standard. According to the Euro 1080 transmission, an image format of 1920 x 1080 with a total of 1250 lines is used for an interlace display with a vertical deflection rate of 50 Hz. An analog luminance signal L2 as shown can be provided for example by a digital satellite receiver via a YPrPb output.

The last line 1250 comprises a serration pulse F1 in the first half of the line as a vertical deflection information for the next frame. The lines 1 - 80 contain only H pulses H1 - H80 for the horizontal deflection. The H pulses are represented by a tri-level pulse, and a positive zero crossing of each pulse H defines the beginning for the respective line, as shown. The picture content PC is contained in lines 81 - 620 for the first field and in lines 706 - 1245 for the second field.

For the indication of the second field, the line 625 comprises a serration pulse F2 in the first half of the line and in the middle of the line a code pulse T, after the serration pulse F2. The code pulse T is also represented by a tri-level sync pulse, as used for the H pulses. In the SMPTE295M standard, the code pulse T is described as a midline tri-level sync pulse, delayed by one-half of the line duration.

The end of each field is therefore identified by the presence of a serration pulse in the final line of each field, lines 625 and 1250. Further, the beginning of the second field is marked by the midline tri-level code pulse T, being in the middle of line 625. The first tri-level sync pulse after a serration pulse F1 or F2 is intended for deriving vertical pulses Vc and Vd, shown in fig. 3, via which the interlaced vertical deflection for the first and second field is controlled for a correct picture display.

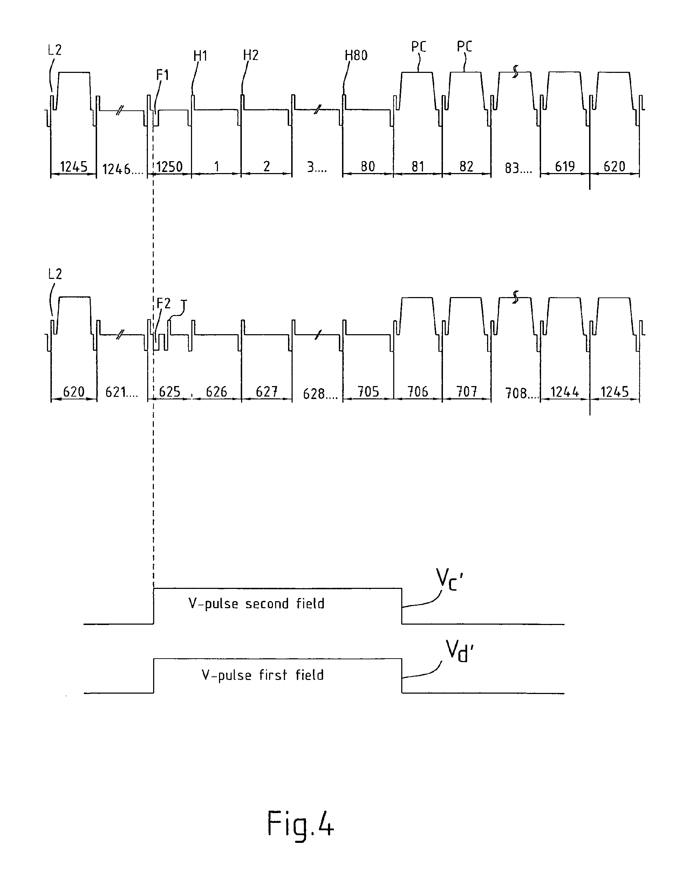

Present synchronization separator circuits included in television receivers utilize only the V pulses of a luminance signal, as described with regard to figures 1 and 2. They cannot process therefore correctly the sync pulses as used by the Euro1080 television broadcast, because the interlace information, which is provided by the code pulse T for the display of the second field, cannot be decoded. As the result, vertical V pulses Vc' and Vd' are generated without a phase shift between the first field and the second field, as shown in fig. 4. The luminance signal L2 shown in fig. 4 corresponds to the luminance signal L2 of fig. 3.

### SUMMARY OF THE INVENTION

It is the object of the present invention, to provide a method and a decoder circuit for separating synchronization pulses, in particular for Euro1080 television transmissions, for providing correct vertical synchronization pulses for an interlace display.

This object is achieved for a method as specified in claim 1 and for a decoder circuit as specified by the features of claim 8. Further specified is a television receiver comprising a respective decoder circuit. Advantageous developments of the invention are specified in the dependent claims.

The method in accordance with the invention comprises the steps of slicing a luminance signal for providing a composite sync signal, separating horizontal sync pulses from the luminance signal for providing a H sync signal, generating a V pulse gate signal from the H sync signal, gating the composite sync signal with the V pulse gate signal for separating a vertical synchronization pulse included in the composite sync signal, generating a code pulse gate signal from the vertical synchronization pulse, and extracting a code pulse included in the composite sync signal via the code pulse gate signal.

The V pulse gate signal is generated for example from a falling edge of a horizontal sync pulse and the code pulse gate signal from the rising edge of a V pulse. The V pulse gate signal has in particular a length of less than a horizontal line, and the code pulse gate signal a length of larger than a half a horizontal line and less than one horizontal line.

The decoder circuit for decoding a vertical synchronization information included in a luminance signal comprises a sync slicer for slicing a luminance signal and for providing a composite sync signal, a V pulse detection circuit for detecting a V pulse included in the composite sync signal and for generating a gated V pulse signal, a code pulse detection circuit coupled to the sync slicer for detecting a code pulse following a V pulse, the code pulse providing the vertical synchronization information for a vertical deflection stage, and a V pulse shaping circuit for generating a vertical synchronization pulse from the code pulse. The code pulse is used in particular for distinguishing the two fields of an interlaced television display format.

The circuit for generating vertical synchronization pulses is included for example in a television receiver, in a settop box, a personal computer or a video recorder. The respective appliance comprises in addition a known horizontal sync separator and synchronization processing circuitry for other television transmission standards. The vertical deflection pulses with respect to a respective video standard are then selected in the appliance via an output switch.

The method and the decoder circuit are in particular useful for a decoding of the vertical synchronization information of HDTV satellite transmissions as provided by ASTRA for Europe, which are known also as Euro1080 HDTV transmission.

### BRIEF DESCRIPTION OF THE DRAWINGS

The invention is explained in more detail below with reference to schematic drawings, the figures showing:
- Fig. 1: a luminance signal with horizontal lines comprising the vertical synchronization information for an interlace display in accordance with the SMPTE274M standard 1080i60Hz,
- Fig. 2: resulting vertical synchronization pulses for the luminance signal as shown in figure 1,
- Fig. 3: a luminance signal with horizontal lines comprising the vertical deflection information for an interlace display in accordance with the Euro1080 HDTV standard SMPTE295M 1080i50Hz, and resulting vertical synchronization pulses, the interlace information being correctly interpreted,
- Fig. 4: the luminance signal as shown in figure 3 and vertical synchronization pulses, where the interlace information is not correctly interpreted by a sync separator and processing circuit,
- Fig. 5: voltage signals used by the inventive decoder circuit,
- Fig. 6: a block diagram showing a decoder circuit for decoding the vertical synchronization information of a Euro1080 HDTV television transmission in accordance with the invention, and
- Fig. 7: a circuit diagram showing an implementation of the circuit of fig. 6.

### DETAILED DESCRIPTION OF PREFERRED EMBODIMENTS

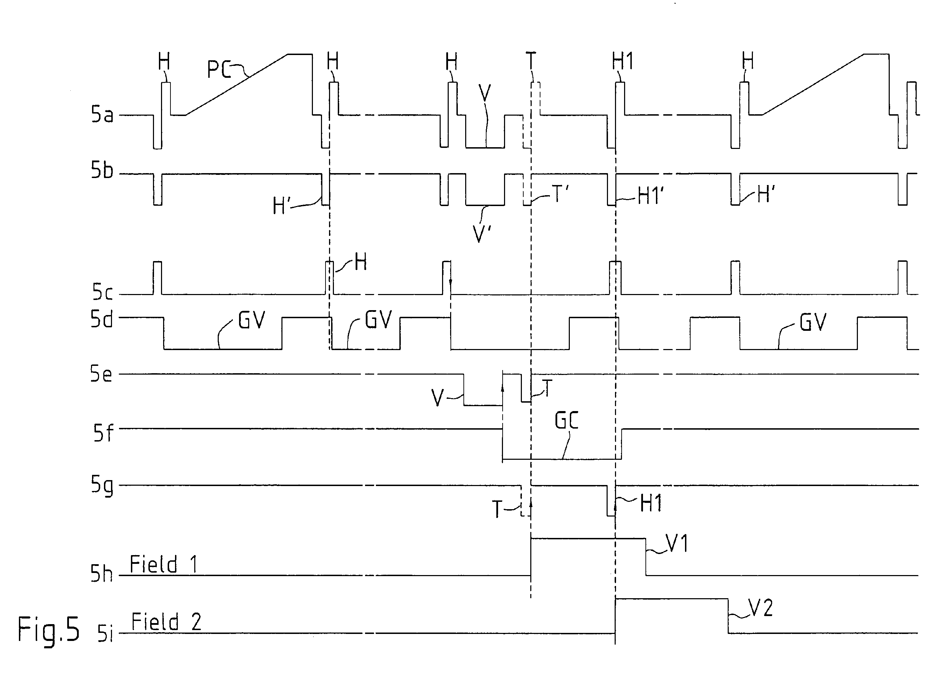

A method for decoding the synchronization information of a Euro1080 television transmission is explained with regard to fig. 5. In figure 5 a luminance signal 5a is shown comprising picture content PC, horizontal sync pulses H for the horizontal deflection, vertical serration pulses V and a code pulse T for indicating the begin of the second field, as described with regard to fig. 3.

Because the picture content PC is contained as a positive signal and the synchronization information essentially in the negative part of the luminance signal 5a, the synchronization information can be easily separated by a sync slicer, which is for example a discriminator circuit having a respective threshold for separating the sync pulses from the remaining signal. The resulting sliced signal is a composite sync signal 5b.

The sync pulses H of the luminance signal 5a are separated by a H sync separator as known from prior art, which is responsive to the tri-level information of the sync pulses H. The H sync separator provides a positive H sync signal 5c as shown in fig. 5. For detecting the pulses V, a V pulse gate GV is generated from the H sync signal 5c, for example from the falling edge of the pulses H as indicated by an arrow. The pulse gates GV, within V pulse gate signal 5d, have a width, which covers the pulse V and also the code pulse T in case of a second field, but not the next H sync pulse H1. In particular, the pulse gate GV has a width of less than a horizontal line, as shown in signal 5d.

By means of the pulse gate signal 5d all pulses between two sync pulses H are separated, which results in a gated V pulse signal 5e in case of a second field. In case of the first field, the gated V pulse signal 5e comprises only the pulse V.

From an edge of the pulse V of signal 5e, for example from the rising edge as indicated in fig. 5, a code pulse gate GC, signal 5f, is generated for detecting the first tri-level sync pulse following the pulse V in signal 5b, which is a code pulse T indicating a second field of a frame or the next H sync pulse, sync pulse H1, indicating a first field of a frame.

The resulting signal 5g contains only the first sync pulse H1 of horizontal line 1 of the first field and the code pulse T from line 625 for the second field, appearing alternately with the begin of a new field. The separated pulses 5g, code pulse T and the pulse H1, are used for generating vertical synchronization pulses V1 and V2, signals 5h and 5i, which can be used by a vertical deflection stage of a television receiver. The rising edges of the code pulse T und H1 can be utilized for example for generating the pulses V1, V2, as indicated by arrows in the signal 5g. The pulses T und H1 are therefore the code pulses providing the interlace information for the vertical deflection. The pulses V1 and V2 perform therefore the wanted half line shift in each field for a correct interlaced picture display.

The code pulse gate GC has a width, which gates only the code pulse T or the first pulse H of the next line, as indicated. The code pulse gate GC has in particular a length of larger than a half of a horizontal line and less than one horizontal line.

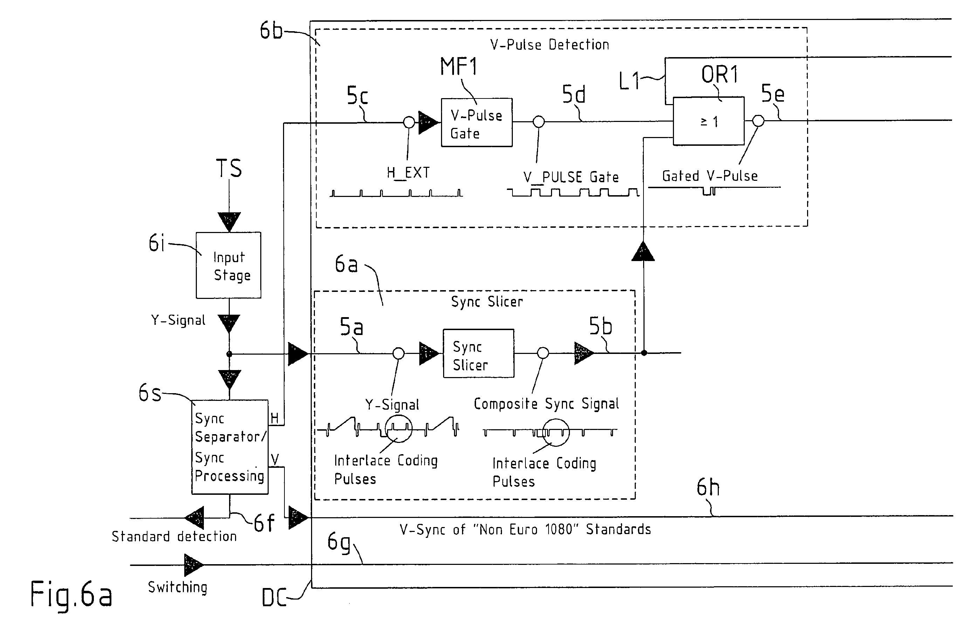

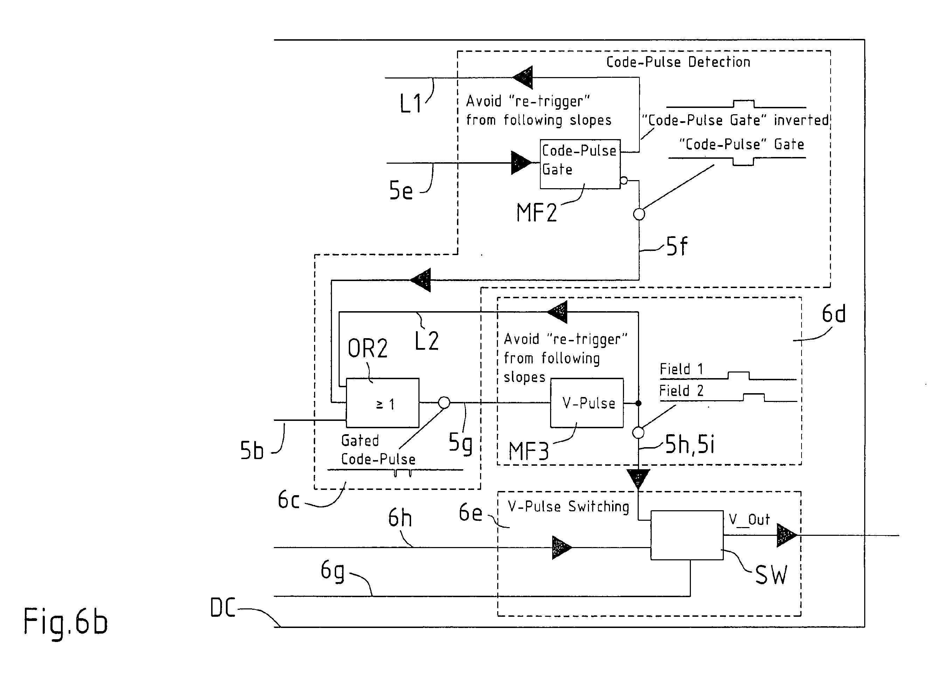

An inventive decoder circuit DC for decoding a vertical synchronization information included in a luminance signal, which generates vertical synchronization pulses for a vertical deflection stage in accordance with the method described with regard to fig. 5 is shown in form of a block diagram in fig. 6. The circuit is included for example in a television receiver and used for a correct decoding of the interlace information of the Euro1080 television transmission. A respective television receiver comprises an input stage 6i, as known, for receiving and processing a television signal TS as provided for example from a digital satellite receiver.

The input stage 6i provides a luminance signal 5a, which is coupled to a sync slicer 6a of the decoder circuit. The signal 5a, also the other signals 5b - 5i shown in fig. 6, correspond to the signals as explained with regard to fig. 5. The sync slicer 6a generates from the luminance signal 5a a composite sync signal 5b comprising the information for the horizontal and vertical deflection.

The television receiver comprises further a sync separator and processing circuit 6s, to which the luminance signal 5a is coupled, and which provides horizontal and vertical sync pulses H and V in accordance with known television standards, for example from PAL, NTSC and SECAM television signals. The circuit 6s decodes in particular also the horizontal synchronization pulses of the Euro1080 television transmission correctly, for providing a H sync signal 5c. The H sync signal 5c may be generated alternatively in another embodiment from the composite sync signal 5b.

The H sync signal 5c is coupled to a V pulse detector circuit 6b of the decoder circuit DC for generating a V pulse gate signal 5d. The V pulse detector circuit 6b comprises a first gate circuit MF1, for example a monostable multivibrator, for generating gate pulses GV of a defined length included in the V pulse gate signal 5d, as explained with regard to fig. 5. The signal 5d is coupled together with the composite sync signal 5b provided by the sync slicer 6a to inputs of a first logic circuit OR1. The logic circuit OR1 extracts the vertical pulses V and code pulses T for providing a gated V pulse signal 5e.

The gated V pulse signal 5e is coupled to a code pulse detection circuit 6c of the decoder circuit DC, in which the code pulses T and H1 are extracted. The code pulse detection circuit 6c comprises a second gate circuit MF2, which generates a code pulse gate signal 5f from the gated V pulse signal 5e. The code pulse detection circuit 6c comprises further a second logic circuit OR2, to which inputs the code pulse gate signal 5f and the composite sync signal 5b is coupled. The logic circuit OR2, for example an OR or an AND gate circuit, provides a code pulse signal 5g.

The code pulse signal 5g is coupled to a V pulse shaping circuit 6d of the decoder circuit. The circuit 6d comprises a third gate circuit MF3, which generates vertical synchronisation pulses V1, V2, signals 5h, 5i, with the correct interlace information for the vertical deflection.

The decoder circuit DC comprises further a first loop L1, which couples an inverted code pulse gate signal of the gate circuit MF2 to an input of the logic circuit OR1 for avoiding re-trigger from following slopes of the signal 5e. Via a second loop L2 the output signal of the gate circuit MF3 is coupled to an input of the logic circuit OR2 for avoiding re-trigger from following slopes of the signal 5g.

The decoder circuit DC comprises further a V pulse switching circuit 6e with a switch SW, which comprises a first input to which the vertical synchronisation pulses V1, V2 coming from the gate circuit MF3 are coupled and a second input, to which the signal 6h from the sync separator and processing circuit 6s is coupled. The circuit 6s provides further a standard detection and couples a respective information via a line 6f to a microprocessor (not shown) of the television set. The microprocessor selects via a line 6g, which is connected to a control input of the switch SW, the vertical synchronisation pulses in accordance with a respective television standard. The output Vout of the switch SW is coupled to a vertical deflection stage (not shown) of the television receiver.

The decoder circuit DC of the figure 6 is therefore able to separate the first horizontal sync pulses after the serration pulse V, the code pulses for the vertical deflection of a Euro1080 television transmission. It detects in particular a first code pulse T, which is only present in odd fields, and a second code pulse H1, which is present in all fields, but which is lying behind the code pulse T in the first horizontal line of the even field and which is used only for the vertical synchronisation information of the odd field.

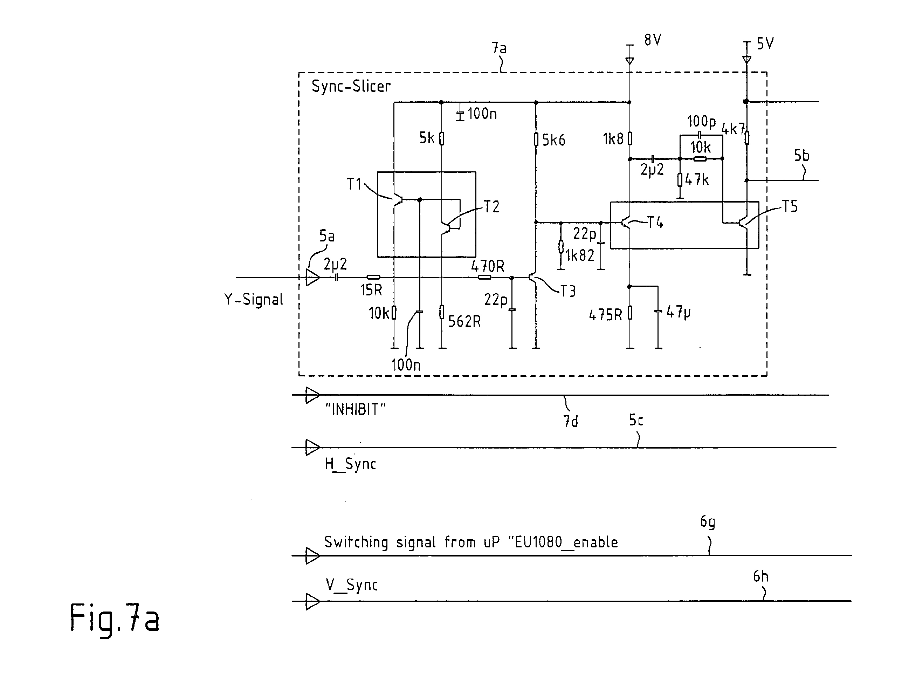

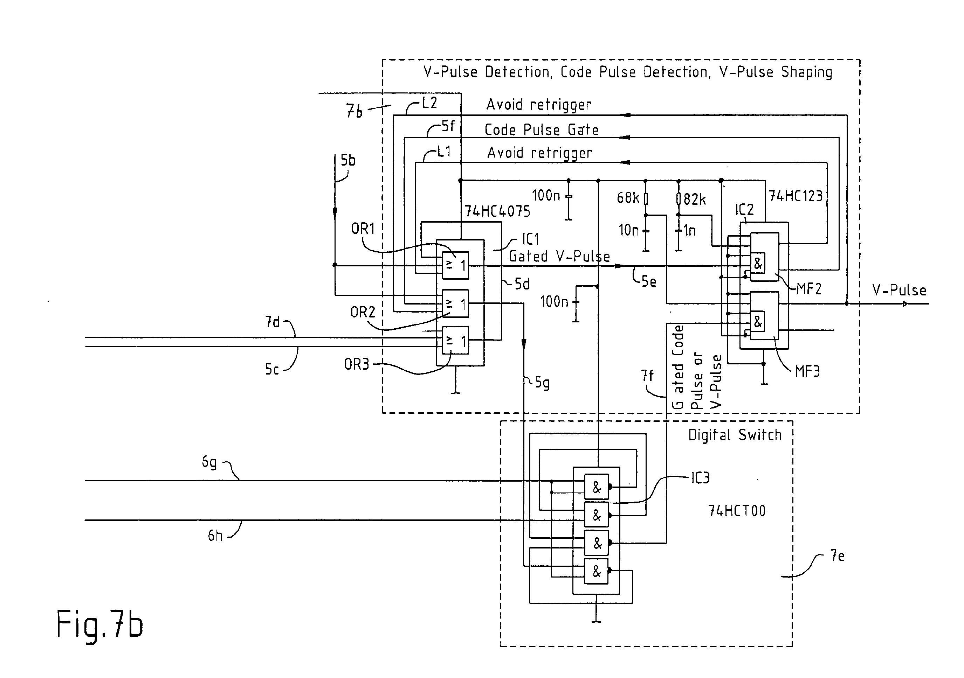

A respective decoder circuit can be realized with standard analog and logic components, as shown in figure 7. A sync slicer 7a, corresponding to the sync slicer 6a of figure 6, comprises an input stage with a first and a second transistor T1, T2, which provide a clamp voltage of about 0,3V for the luminance signal 5a. The transistor T2 provides a temperature stabilization for the clamp voltage. The clamped signal is then coupled to a transistor stage T3, which is a high impedance emitter follower. To the transistor stage T3 an amplifier stage with transistors T4, T5 is coupled for providing a composite sync signal 5b.

The V pulse detection, code pulse detection and V pulse shaping is made by a circuit 7b, which comprises a first integrated circuit IC1 and a second integrated circuit IC2.

IC1 is a triple 3-input OR gate, for example a 74HC4075, and IC2 a dual retriggerable monostable multivibrator with reset, for example a 74HC123. Respective circuits are available for example from Philips Semiconductors.

To the first OR gate OR1 of IC1 the composite sync signal 5b, the V pulse gate signal 5d and the loop L1 are coupled for providing a gated V pulse signal 5e. To the inputs of the second OR gate of IC1, OR2, the code pulse gate signal 5f, the composite sync signal 5b and the loop L2 are coupled for providing a code pulse signal 5g. The third OR gate OR3 of IC1 is used to generate the V pulse gate signal 5d from the H sync signal 5c via an inhibit signal 7d.

In this embodiment the inhibit signal 7d is already available in the television set, and which can be used for generating the V pulse gate signal 5d from the H sync signal 5c. This safes one monostable multivibrator, V pulse gate circuit MF1 of the decoder circuit of figure 6. The inhibit signal 7d is provided for example by the sync separator and processing circuit 6s. The pulse width of the inhibit signal 7d is adjusted such that a V pulse gate GV with a sufficient gate length is generated via the OR circuit OR3.

Because the essential information of the signals 5b and 5d is provided by the logical "low" level, OR gates can be used for a correct signal processing. The OR gates provide in this embodiment a logical AND combination, because the output of an OR gate is only low, when all input signals are low. But in other embodiments inverted digital signals with respective AND circuits may be used also in a decoder circuit.

IC2 comprises a first monostable multivibrator MF2, which corresponds to code pulse gate circuit MF2 of figure 6, for generating a code pulse gate signal 5f from the gated V pulse signal 5e. A second monostable multivibrator MF3, corresponding to the V pulse gate circuit MF3, is used for generating vertical synchronisation pulses V1, V2, appropriate for the vertical deflection stage of the television receiver.

In the embodiment of figure 7, the V pulse switching circuit 7e, which corresponds to the V pulse switching circuit 6e of figure 6, is arranged before the V pulse shaping circuit MF3.

The digital switch circuit 7e comprises in this embodiment a Quad 2-input NAND gate IC, IC3, for example an integrated circuit 74HCT00. To the circuit 7e the code pulse signal 5g coming from OR2 of IC1 and the signal 6h from the sync separator and processing circuit 6s of the figure 6 is coupled, for selecting the correct vertical synchronisation pulses for a respective television standard in response to the switching signal 6g of the microprocessor of the television set.

The output signal 7f of the digital switch circuit 7e is coupled to the V pulse shaping circuit MF3 providing vertical synchronisation pulses V1, V2, which can be recognized by the vertical deflection stage. The digital switch circuit 7e is arranged before the V pulse shaping circuit MF3, in contrast to the decoder circuit DC of figure 6, requiring therefore only one V pulse shaping circuit MF3 for all television standards. The width of the vertical synchronisation pulses V1, V2 is therefore always the same for all television standards.

A decoder circuit for the vertical synchronization information of the Euro1080 HDTV transmission of figure 7 can be easily integrated therefore in a television set.

Only a few standard logic components are necessary. But the method as explained with regard to figure 5 can be performed for example also in the digital domain via a signal processor, when a digital luminance signal is used. Then all method steps would be performed by the signal processor, for providing vertical synchronisation pulses V1, V2 for the vertical deflection stage.

The present invention is not limited to the embodiments as described with regard to the figures and other modifications are also possible for those skilled in the art without departing from the scope of the invention. The decoder circuit in particular may be used not only within a television set, but also in other television signal processing devices. The vertical synchronisation pulses V1, V2 are appropriate for a television receiver comprising a deflection stage for a cathode ray tube (CRT), but the decoder circuit is also applicable for LCD and Plasma television sets.

## Claims

1. Method for decoding a vertical synchronization information (T, H1) included in a luminance signal (5a) for generating vertical deflection pulses (V1, V2),
**comprising the steps of**
slicing the luminance signal (5a) for providing a composite sync signal (5b) comprising horizontal and vertical synchronization pulses,
separating the horizontal sync pulses (H) from the luminance signal (5a) or the composite sync signal (5b) for providing a H sync signal (5c),
generating a V pulse gate signal (5d) from the H sync signal (5c),
gating the composite sync signal (5b) with the V pulse gate signal (5d) for separating a vertical synchronization pulse (V) included in the composite sync signal (5b),
generating a code pulse gate signal (5f) from the vertical synchronization pulse (V), and
extracting a code pulse (T, H1) included in the composite sync signal (5b) via the code pulse gate signal (5f).

2. Method according to claim 1, **wherein** a V pulse gate (GV) included in the V pulse gate signal (5d) has a length of less than a horizontal line.

3. Method according to claim 2, **wherein** each V pulse gate (GV) is generated from a falling edge of each H pulse (H) included in the H sync signal (5c).

4. Method according to one of the preceding claims,
**wherein** a code pulse gate (GC) included in the code pulse gate signal (5f) has a length of larger than a half of a horizontal line and less than one horizontal line.

5. Method according to claim 4, **wherein** the code pulse gate (GC) is generated from the rising edge of a V pulse (V) included in the gated V pulse signal (5e).

6. Method according to one of the preceding claims,
**wherein** the H sync signal (5c) is generated from the luminance signal (5a) via a sync separator and processing circuit (6s).

7. Method according to one of the preceding claims,
**wherein** the luminance signal (5a) is derived from a HDTV television transmission signal compliant with the SMPTE295M standard.

8. Decoder circuit (DC) for decoding a vertical synchronization information included in a luminance signal (5a), comprising
a sync slicer (6a) for slicing the luminance signal (5a) and for providing a composite sync signal (5b),
a V pulse detection circuit (6b) for detecting a V pulse (V) included in the composite sync signal (5b) and for generating a gated V pulse signal (5e),
a code pulse detection circuit (6c) coupled to the sync slicer (6a) for detecting a code pulse (T, H1) following a V pulse (V), said code pulse (T, H1) providing the vertical synchronization information for a vertical deflection stage, and
a V pulse shaping circuit (6d) for generating a vertical synchronization pulse (V1, V2) from the code pulse (T, H1).

9. Television receiver comprising a decoder circuit in accordance with claim 8 for decoding a vertical synchronization information in accordance with a method as described in one of the claims 1 - 7.

10. Television receiver according to claim 9, comprising further an input stage (6i) for providing a luminance signal (5a), a sync separator and processing circuit (6s) for providing a H sync signal (5c) and a V sync signal (6h) in accordance with a received television standard, and a V pulse switching circuit (6e) for selecting between a V pulse signal (5h, 5i) from the decoder circuit (DC) and the V sync signal (6h).

11. Television receiver according to claim 10, **wherein** the sync separator and processing circuit (6s) provides a standard detection signal (6f) for a microprocessor of the television receiver, the microprocessor providing a switching signal (6g) for a switch (SW) of the V pulse switching circuit (6e) in accordance with a received television standard.

12. Television receiver according to claim 9, 10 or 11,
**wherein** a V pulse shaping circuit (MF3) is arranged after the V pulse switching circuit (7e) for providing vertical synchronization pulses (V1, V2) with the same length for all receivable television standards.

13. Television receiver according to one of the claims 9 - 13, **wherein** a first logic circuit (IC2) comprising monostable multivibrators is used for generating the code pulse gate (GC) and the vertical synchronization pulses (V1, V2), and a second logic circuit (IC1) comprising AND or OR gates is used for separating V pulses (V) and code pulses (T, H1).

14. Television receiver according to one of the claims 9 - 13, **wherein** the decoder circuit is used for processing a luminance signal (5a) being derived from a HDTV television transmission signal.
